# EUROPEAN PATENT APPLICATION

(11) **EP 4 755 728 A1**
(43) Date of publication of application: **10.06.2026**
(21) Application number: 24849338.9
(22) Date of filing: 22.05.2024
(51) Int. Cl.: B60R 22/34, B60N 2/42

(54) **SEAT BELT RETRACTOR**

(30) Priority: 28.07.2023 KR 20230098978
(71) Applicant: Autoliv Development AB, 44783 Vargarda (SE)
(72) Inventor: MOON, Chan-Ki, Hwaseong-si Gyeonggi-do 18497 (KR); KIM, Jung-Han, Hwaseong-si Gyeonggi-do 18497 (KR); YOON, Ho-Beom, Hwaseong-si Gyeonggi-do 18497 (KR)
(74) Representative: Müller Verweyen
(86) International application number: PCT/KR2024/006928
(87) International publication number: WO 2025/028767

(57) **Abstract**

The present invention relates to a seat belt retractor comprising: a spindle module including a seat belt webbing and a spindle having an outer surface on which the seat belt webbing is wound; and front and rear brackets respectively coupled to front and rear sides of the spindle module, wherein the front and rear brackets have first and second flange parts formed on both ends of the front and rear brackets so as to be fixed to a backrest frame of a seat in a state of the front and rear brackets overlapping each other, so that when an emergency situation of a vehicle occurs, an occupant can be restrained and safely protected, and the angle of insertion and withdrawal of the seat belt webbing can be variously adjusted.

## Description

### Technical Field

The present disclosure relates to a seat belt retractor, and more particularly, to a seat belt retractor which prevents a seat belt webbing from being pulled out in an emergency situation such as a vehicle collision during driving of a vehicle.

### Background Art

In general, a vehicle is equipped with a seat belt device in a seat to ensure the safety of an occupant.

The seat belt device includes a seat belt retractor which operates to allow a band-shaped seat belt webbing (hereinafter, referred to as a "webbing") for fixing an occupant to be wound on a spool, or to be pulled out, and a buckle into which a tongue fixed at one end of the webbing is removably inserted.

The seat belt retractor prevents an occupant wearing the seat belt from being bounced forward or moved away from a seat due to driving inertia when the vehicle suddenly stops or accelerates due to a vehicle accident. Such a seat belt retractor may include an emergency tensioning device and a pretensioning device that allow the webbing to be pulled out in a normal state when the occupant wears the seat belt, but, when a change in the pulling-out acceleration of the webbing or the inclination of the vehicle is detected due to a vehicle collision, prevent the webbing from being further pulled out, and reduce looseness or hanging of the webbing, that is, slackness of the webbing.

For example, in Patent Document 1 and Patent Document 2 below, a seat belt retractor technique for controlling the retracting and pulling-out operations of a seat belt webbing is disclosed.

Such a seat belt retractor may be mounted in a vehicle body, for example, a center pillar of the vehicle, a backrest of a seat, a rear pillar, etc. Accordingly, a mounting posture of the seat belt retractor may be variously changed according to a structure of the center pillar, the backrest of the seat, the rear pillar, etc. That is, the seat belt retractor is not always mounted in the horizontal state, and may be mounted in a state in which it is inclined from the horizontal state by a predetermined angle in a left-right direction or a front-rear direction.

Recently, a seat installed in a vehicle is fabricated to be slim by designing a thickness of a backrest in the front-rear direction (hereinafter, referred to as a 'thickness') to be thin. An integrated seat belt (Belt In Seat (BIS)) device that is integrated into a seat may be applied to such a slim seat.

In particular, a seat applied to an autonomous vehicle is being developed to be rotatable in the left-right direction and to rotate a backrest backward up to a maximum angle of 180°.

Meanwhile, the related-art seat belt retractor has the fixed pull-out direction of the webbing while fixed to a mounting target, that is, a backrest of a seat or a vehicle body.

For the related-art integrated seat belt device, a seat belt retractor for a driving seat and a seat belt retractor for a passenger seat are separately manufactured, and are mounted to allow webbings to be pulled out in directions that are symmetric to each other according to positions where seats are installed in a vehicle, that is, the side of the driving seat and the side of the passenger seat.

To this end, the related-art integrated seat belt device has problems that the manufacturing cost increases, components are difficult to manage, and incorrect assembly occurs by operators due to the increased number of components of the seat belt retractor.

In addition, there is a need for the development of a seat belt retractor technology that can be securely coupled to slim seats and enables smooth operation in order to maximize inner spaces of vehicles.
(Patent Document 1) U.S. Patent No. 6,499,554 (registered on December 31, 2002)
(Patent Document 2) U.S. Patent No. 6,443,382 (registered on September 3, 2002)

### Disclosure of Invention

### Technical Problem

An object of the present disclosure is to solve the above-described problems, and to provide a seat belt retractor which restrains and safely protects an occupant in an emergency situation of a vehicle, and adjusts retracting and pulling-out angles of a seat belt webbing variously.

Another object of the present disclosure is to provide a seat belt retractor which is applied for both a driver seat side and a passenger seat side regardless of a position of a seat where the seat belt retractor is mounted in a vehicle.

Still another object of the present disclosure is to provide a seat belt retractor which enables smooth operations in a state where the seat belt retractor is installed on a seat, is applicable to slim seats, and allows a headrest to be easily mounted.

### Solution to Problem

To achieve the above-described objects, a seat belt retractor according to the present disclosure may include: a spindle module including a seat belt webbing and a spindle having the seat belt webbing wound around an outer surface thereof; and front and rear brackets which are coupled to front and rear sides of the spindle module, respectively, and first and second flanges may be formed on both ends of the front and rear brackets to be fixed to a backrest frame of a seat while overlapping each other.

### Advantageous Effects of Invention

According to the present disclosure as described above, the seat belt retractor has the effects of safely protecting occupants by restraining in an emergency situation of the vehicle, and variously adjusting the retracting and pull-out angles of the seat belt webbing.

According to the present disclosure, other modules are arranged with reference to the spindle, so that the amount of winding (or load) and the thickness of the seat belt webbing wound around the spindle do not affect the width of the seat belt retractor in the front-rear direction where the spindle is installed.

Accordingly, according to the present disclosure, the width of the seat belt retractor in the front-rear direction is minimized and the seat belt retractor is mountable in a narrow space, so that the present disclosure is effectively applicable to slim seats.

In addition, according to the present disclosure, fixing recesses are formed in the backrest frame to fix the flanges provided in the seat belt retractor, so that it is possible to prevent a damage or breakage to a cover caused by interference with the securing member or flange in the process of installing the cover on the backrest with the seat belt retractor being mounted in the backrest of the seat, and flatness of the outer surface of the cover installed on the backrest is ensured.

In addition, according to the present disclosure, the first and second flanges formed on the front and rear brackets, respectively, are fixed to the backrest frame while overlapping each other, so that a fixing force for the seat belt retractor may be enhanced to securely fix, and hence, vibrations or movements of the seat belt retractor occurring during driving of the vehicle may be effectively prevented.

In addition, according to the present disclosure, the headrest poles are penetratingly coupled to the backrest with the seat belt retractor fixed to the backrest, thereby further enhancing the fixing force of the seat belt retractor and improving workability when assembling.

### Brief Description of Drawings

FIG. 1 is a perspective view illustrating a seat belt retractor installed in a seat according to a preferred embodiment of the present disclosure;
FIGS. 2 and 3 are perspective views illustrating a backrest frame of a backrest and the seat belt retractor shown in FIG. 1 being connected and disconnected, respectively;
FIG. 4 is a perspective view illustrating the seat belt retractor shown in FIG. 3 from a different angle; and
FIG. 5 is a cross-sectional view taken on line A-A' of FIG. 4.

### Best Mode for Carrying out the Invention

Hereinafter, a seat belt retractor and a seat employing the same according to preferred embodiments of the disclosure will be described in detail with reference to the accompanying drawings.

Hereinafter, a direction toward a steering wheel from a seat of a vehicle is referred to as a 'forward direction (F),' and the opposite direction thereof is referred to as a 'backward direction (B).' In addition, terms indicating directions such as 'left side (L),' 'right side (R),' 'upward direction (U),' and 'downward direction (D)' are defined to indicate respective directions with reference to the forward direction (F) and the backward direction (B) described above.

In the present embodiment, an integrated seat belt (Belt In Seat (BIS)) device integrated into a backrest of a seat will be described, but the present disclosure is not limited thereto.

That is, it should be noted that the present disclosure is changed to be installed at various positions of a vehicle body, such as a pillar disposed on a side surface of the vehicle body, a vehicle panel of the rear side of a seat, or a roof or a floor of the vehicle body as well as a backrest of a seat.

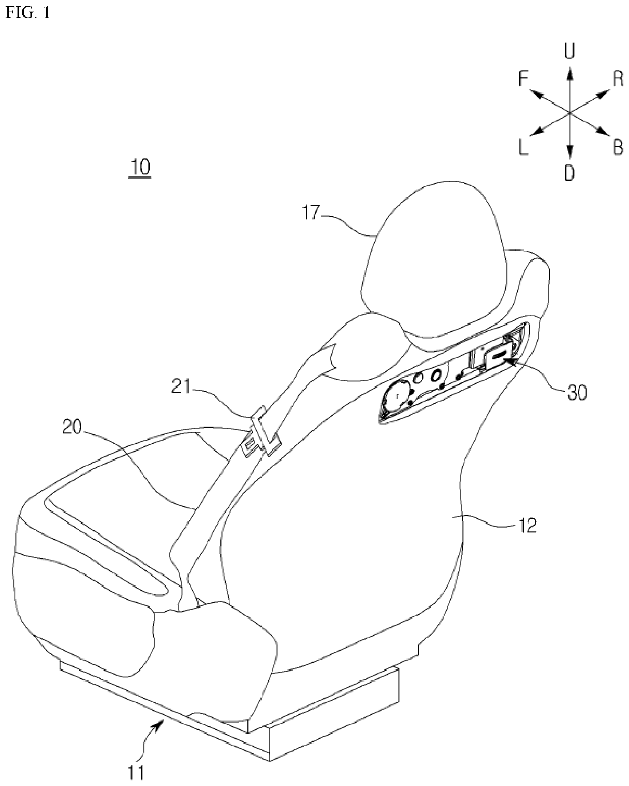

A configuration of a seat belt device employing a seat belt retractor according to a preferred embodiment of the present disclosure will be described in detail with reference to FIGS. 1 to 3.

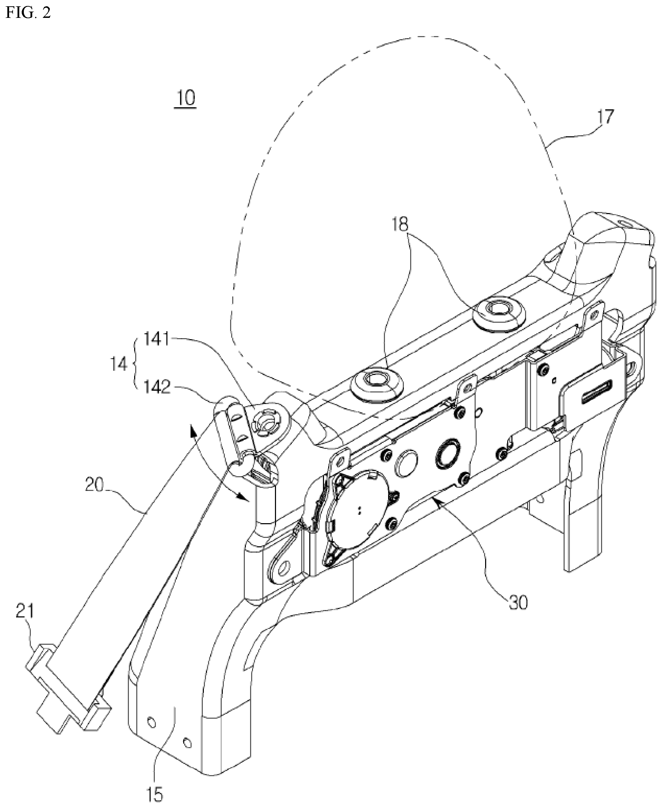

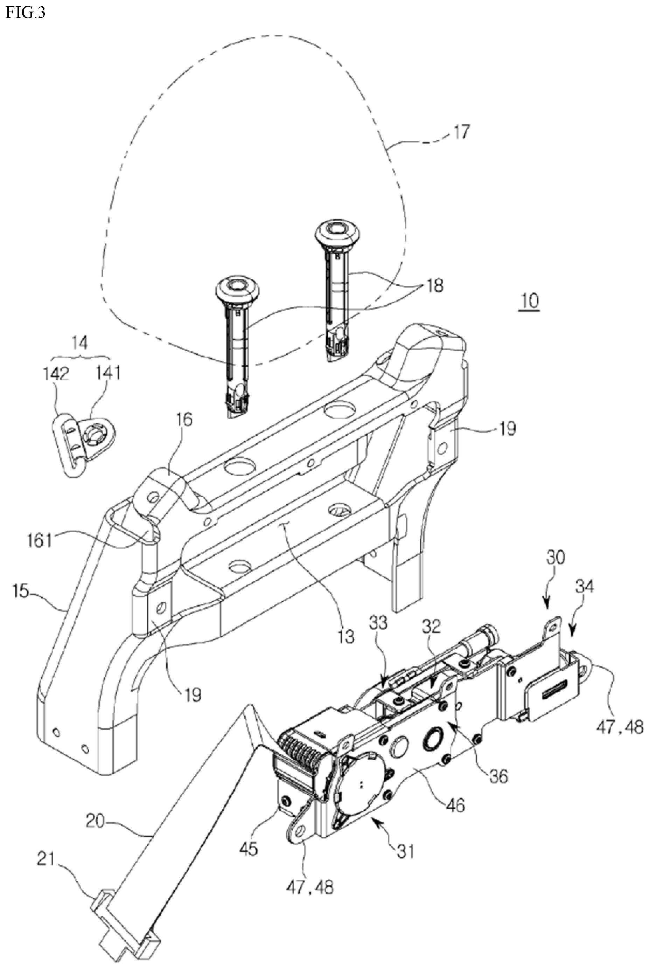

FIG. 1 is a perspective view illustrating a seat belt retractor installed in a seat according to a preferred embodiment of the disclosure, and FIGS. 2 and 3 are perspective views illustrating a backrest frame of a backrest and the seat belt retractor shown in FIG. 1 being connected and diconnected, respectively.

As shown in FIGS. 1 to 3, the seat belt device 10 includes a seat belt webbing (hereinafter, referred to as a 'webbing') 20 which has a band shape to fix an occupant, a seat belt retractor 30 which is mounted in a backrest 12 of a seat 11 to wind the webbing 20 when necessary, a belt tongue 21 installed at an end of the webbing 20 that is pulled out, and a buckle (not shown) into which the belt tongue 21 is removably inserted.

A mounting space 13 may be provided in the backrest 12 of the seat 11 to have the seat belt retractor 30 mounted therein.

The mounting space 13 may be provided inside the backrest 12, and a guide member 14 may be installed at one side of the mounting space 13 to guide the webbing 20 that is pulled out to the outside of the backrest 12 from a spindle module 31.

The mounting space 13 may be provided on an upper portion of the rear side of the backrest 12. That is, the mounting space 13 is a space that is formed on a backrest frame 15 disposed inside the backrest, and the seat belt retractor 20 is disposed in the mounting space 13 formed on the backrest frame 15 and may be securely fixed to the backrest frame 15 by using a securing member, which will be described later.

Of course, the present disclosure is not limited thereto, and it is illustrated in FIG. 1 that the mounting space 13 is disposed substantially at a center of an upper end of the backrest 12, but the mounting space 13 may be formed at a position spaced apart from the upper end of the backrest 12 downward by a predetermined distance, or may be formed to be biased toward the left side or right side from the center of the backrest 12.

In addition, the mounting space 13 may be provided at various positions of a vehicle body, such as a pillar or a vehicle panel of a rear side of the seat, a roof or a floor of the vehicle body.

That is, an integrated seat belt device integrated into a slim seat is illustrated in the present embodiment, but it should be noted that the present disclosure may be changed to be applied to typical seats or seat belt devices applied to vehicle structures.

Meanwhile, a space may be fluidly formed at one side of the mounting space 13 to allow the webbing 20, which is pulled out from the seat belt retractor 30, to be placed toward the guide member 14.

The guide member 14 may be rotatably mounted an upper end of one side of the backrest 12, for example, on an upper portion of the left side of the backrest frame 15 when the seat belt retractor is applied to the driver seat 11. To achieve this, a mounting protrusion 16 may protrude from the upper portion of the left side of the backrest frame 15 to have the guide member 14 mounted thereon.

Therefore, the guide member 14 may be mounted to be rotatable about a securing bolt that is secured to the mounting protrusion 16 of the backrest frame 15.

For example, the guide member 14 may include a securing portion 141 which has a through-hole through which the securing bolt penetrates, and a webbing pull-out portion 142 in which an pull-out hole is formed to allow the webbing 20 to retract or to be pulled out therethrough.

That is, the guide member 14 is provided as a plate member having a substantially triangular or pentagonal shape, and the webbing pull-out portion 142 may be formed to have a width wider than the width of the webbing 20 to allow the webbing 20 to be pulled out or retract smoothly through the pull-out hole.

Therefore, the webbing 20 may rotate according to occupant's body type or body frame, thereby changing a pull-out direction and a pull-out angle.

A headrest 17 may be mounted on an upper end of the backrest 12 to support occupant's head. One pair of headrest poles 18 may be provided on a lower portion of the headrest 17 to be coupled to an upper end of the backrest frame 15.

The headrest poles 18 may be mounted in the backrest frame 15 by penetrating through the seat belt retractor 30 mounted in the backrest frame 15 along the vertical direction. Here, the headrest poles 18 may be mounted in the backrest frame 15 to be movable up and down to be able to adjust the height of the headrest 17 according to occupant's body type or physical condition.

Hereinafter, the configuration of the seat belt retractor according to a preferred embodiment of the disclosure will be described in detail with reference to FIGS. 2 to 5.

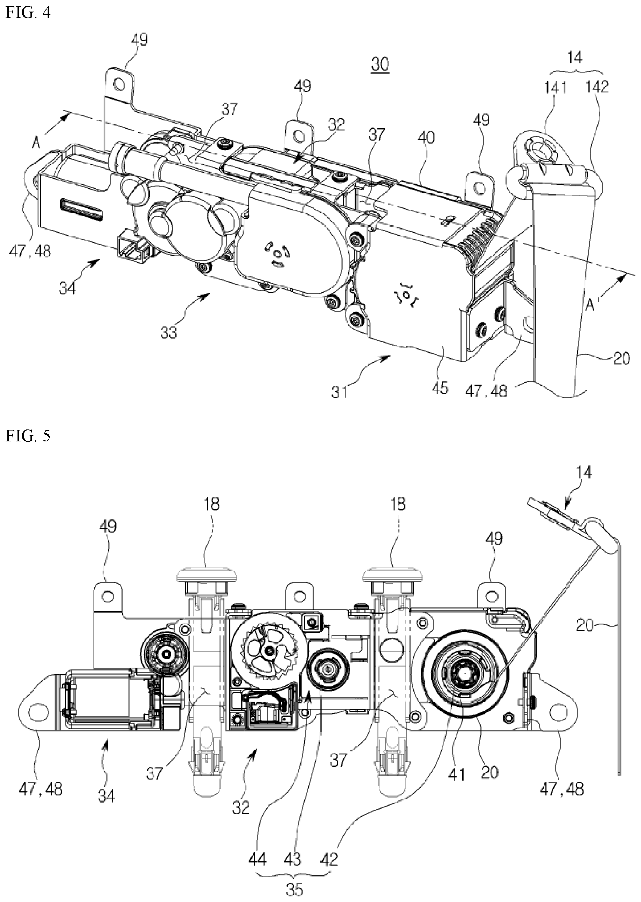

FIG. 4 is a perspective view illustrating the seat belt retractor shown in FIG. 3 from a different angle, and FIG. 5 is a cross-sectional view taken on line A-A' of FIG. 4.

As shown in FIGS. 2 to 5, the seat belt retractor 30 according to a preferred embodiment of the disclosure is manufactured by modulizing respective components applied to the seat belt retractor 30 according to function blocks, and selectively combining the modulized components.

Specifically, the seat belt retractor 30 may include a spindle module 31 around which the webbing 20 is wound, a sensor module 32 which detects changes in the inclination and acceleration of the vehicle, and an emergency tensioning module 33 which reduces slackness by winding the webbing 20 upon collision of the vehicle.

The seat belt retractor 30 may further include a pretensioning module 34 which smoothly pulls out the webbing 20 during normal driving of the vehicle, and reduces slackness by winding the webbing 20 before collision, and an additional function module.

In the present embodiment, the seat belt retractor 30 may be assembled by modulizing the components applied to the seat belt retractor 30, that is, the spindle module 31, the sensor module 32, the emergency tensioning module 33, the pretensioning module 34, and the additional function module, and selectively combining the modulized components.

The additional function module may further include one or more of a load adjustment module 35 which adjusts a load applied to the webbing 20 according to an occupant state condition including occupant's body frame or weight information, and a power transmission module 36 which mechanically connects the respective modules to transmit a force generated by driving of each module to the spindle module 31.

For example, the load adjustment module 35 may include a first limiter 42 which provides a relatively high level load to a spindle 41 when the occupant sitting on the corresponding seat is a relatively heavy adult man, a second limiter 43 which provides a relatively low level load to the spindle 41 when the occupant sitting on the corresponding seat is a relatively light woman or child, and a switching unit 44 which switches to adjust a load for releasing the webbing 20 by selectively using the torsion of the first limiter 42 and the second limiter 43.

The first limiter 42 may be installed inside the spindle 41 of the spindle module 31, and the second limiter 43 may be disposed outside the spindle 41 in parallel with the first limiter 42. Therefore, the second limiter 43 may be connected with or disconnected from the spindle 41 through the switching unit 44 and the power transmission module 36.

The switching unit 44 may wind the webbing 20 by rotating the spindle 41 by a tensioning unit 43 provided in the emergency tensioning module 33, and then, may switch to adjust the load for releasing the webbing 20 by selectively using the torsion of the first limiter 42 and the second limiter 43. Accordingly, the switching unit 44 may adjust the load applied to occupant's shoulder by the webbing 20 and the amount of movement of the webbing 20.

The power transmission module 36 may be provided at the front side and rear side of the seat belt retractor 30 to function to connect between the respective modules to transmit the force generated in each module, for example, the emergency tensioning module 33 and the pretensioning module 34, to the spindle module 31.

Accordingly, a width of the seat belt retractor 30 in the front-rear direction may be limited to the width of the entire module including the power transmission module 36 connecting the respective modules and a housing or a bracket in which the respective modules are installed.

For example, the power transmission module 36 may include a plurality of gears which are connected to driving shafts of devices, a plurality of rotation shafts on which the respective gears are installed, and a housing which shields outer surfaces of the gears and the rotation shafts.

Meanwhile, the spindle module 31 and the sensor module 32 are basic modules that constitute the seat belt retractor 30, and may be manufactured as separate modules and assembled as shown in FIG. 1, or may be provided as one integrated module.

The sensor module 32 may be provided as a vehicle sensor device including an acceleration sensor to detect a change in the acceleration of the vehicle and an inclination sensor to detect a change in the inclination of the vehicle.

In the present embodiment, it is illustrated that both the change in the inclination of the vehicle and the change in the acceleration of the vehicle are detected by using the sensor module 32.

The spindle module 31 is provided with the spindle 41 having the webbing 20 wound on an outer surface thereof.

The spindle module 31 may operate to wind the webbing 20 when the acceleration of the vehicle or the inclination of the vehicle is changed due to a vehicle collision.

The spindle module 31 may further provide a function of only retracting the webbing in a predetermined section in order to fix a child seat in combination with the sensor module 32.

In the following descriptions, a direction in which the webbing 20 is pulled out is set to an upward direction (U), and a direction in which the spindle 41 is mounted is set to a front-rear direction (F, B).

The spindle module 31 is provided with the spindle 41 having the webbing 20 wound on an outer surface thereof.

The spindle module 31 may operate to wind the webbing 20 when the pull-out acceleration of the webbing 20 or the inclination of the vehicle is changed due to a vehicle collision.

To achieve this, the spindle module 31 may further include a spindle disk 23 and a spindle gear 24 disposed at both sides of the spindle 41, that is, a front end and a rear end, along with the webbing 20 and the spindle 41.

The spindle module 31 may further provide a function of only retracting the webbing 21 in a predetermined section in order to fix a child seat.

In the following descriptions, a direction in which the webbing 20 is pulled out is set to an upward direction (U), and a direction in which the spindle 41 is mounted is set to a front-rear direction (F, B).

In the present embodiment, a thickness of the seat belt retractor 30, that is, a width of the vehicle in the front-rear direction, is minimized to allow the seat belt retractor to be mounted in a slim seat.

For example, each module may be manufactured to have the same thickness of about 40 mm to 90 mm, or modules other than the spindle module 31 may be manufactured to have the same thickness as the thickness of the spindle module 31 or a thickness smaller than the thickness of the spindle module 31.

In particular, the overall thickness of the seat belt retractor 30 may be 1.5 or lower times larger than the width of the webbing 20. For example, when the webbing 20 has a width of about 50 mm, the thickness of the seat belt retractor 30 may be about 75 mm or less.

In addition, each module may be selectively disposed on a side of the spindle module 31 with reference to the center of the spindle module 31, that is, on a right or left side, or an upper portion or a lower portion of the spindle module 31. Therefore, the respective modules may be mechanically connected by the power transmission module 36 which connects the modules and transmits power.

For example, the spindle module 31 may be disposed at one side or the center of the seat belt retractor 30, and the emergency tensioning module 33, the sensor module 32, and the pretensioning module 34 may be disposed at one side or both sides of the spindle module 31.

Of course, the disclosure is not limited thereto.

For example, the sensor module 32 and the emergency tensioning module 33 may be disposed on the left side or right side of the spindle module 31, and the pretensioning module 34 may be disposed on an upper portion or a lower portion of the spindle module 31.

Alternatively, the pretensioning module 34 may be disposed on the left side or right side of the spindle module 31, and the sensor module 32 and the emergency tensioning module 33 may be disposed on upper portions or lower portions of the spindle module 31 and the pretensioning module 34.

In the present embodiment, it is illustrated that other modules except for the spindle module 31, that is, the sensor module 32, the emergency tensioning module 33, the pretensioning module 34, and the additional function module are disposed on one side of the spindle 41 with reference to the spindle module 31 which uses the spindle module 31 as an axis, the right side as viewed from FIG. 4.

In addition, the other modules are connected to each other through the power transmission module 36 installed on the front side and the rear side to transmit power to the spindle 41.

To achieve this, the driving shafts of the other modules may be arranged in parallel with or perpendicularly to the arrangement direction of the spindle 41.

As described above, some of the above-described modules, for example, the pretensioning module 34, may be omitted or an additional function module may further be combined and assembled according to specification of the vehicle, specification of the seat belt retractor 30 if necessary.

In the present embodiment, the other modules except for the spindle module 31 are fabricated to have the same thickness as that of the spindle module 31 or have a thickness smaller than that of the spindle module 31, so that the width of the seat belt retractor 30 in the front-rear direction, which is mounted in the backrest 12 (see FIG. 2) of the seat 11, can be constantly maintained.

In the present disclosure, the other modules except for the spindle module are disposed with reference to the spindle, so that the amount of winding (or load) and the thickness of the seat belt webbing wound around the spindle do not affect the width of the seat belt retractor in the front-rear direction where the spindle is installed.

Accordingly, by manufacturing each module of the seat belt retractor 30 to have a minimum thickness and arranging the other modules than the spindle module 31 with reference to the spindle 41, the width of the seat belt retractor 30 in the front-rear direction can be minimized and can be fabricated to be slim.

As described above, the present disclosure may be effectively applied to slim seats as the total volume of the seat belt retractor is minimized and the seat belt retractor is enabled to be mounted in a narrow space.

The respective modules combined are disposed in parallel with or perpendicularly to the direction in which the spindle 41 is installed so as to allow the shafts provided in the modules to face the same direction, for example, the front-rear direction. Therefore, each module may be configured to continuously transmit or receive power by using power transmission members such as a gear, a chain, or a belt, etc. provided in the above-described power transmission module 36.

That is, the power transmission module 36 may include a spindle gear which is connected to the spindle 41, a locking gear which is provided in the emergency tensioning module 33, a transmission gear which is connected to a power transmission unit to transmit rotational force generated in a driving motor of the pretensioning module 34, and one or more connection gears which connect between the above-described gears.

Hereinafter, a coupling structure and an operating method of the seat belt retractor and the backrest frame according to a preferred embodiment of the disclosure will be described in detail.

In the present embodiment, brackets are installed on the front side and the rear side of each module constituting the seat belt retractor 10, respectively, and the modules are fixed to the backrest frame 15 by using the brackets.

For example, front and rear brackets 45, 46 may be installed on the front surface and the rear surface of the spindle module 31, respectively, and the front and rear brackets 45, 46 may be connected to brackets disposed on the front surfaces and the rear surfaces of different modules, respectively.

Therefore, in the present embodiment, the front and rear brackets connected to each other are collectively referred to as the front bracket 45 and the rear bracket 45, respectively.

First and second flanges 47, 48 may be formed on both ends of the front and rear brackets 45, 46 to be fixed at both sides of the mounting space 13 formed in the backrest frame 15, respectively.

For example, the front bracket 45 of the spindle module 31 may be formed in a substantially hexahedral shape having a right side and a rear side opened, and the first flange 47 may be bent from a rear end of the left side of the front bracket 45 in the leftward direction.

On the other hand, the rear bracket 46 of the spindle module 31 may be formed in a substantially hexahedral shape almost close to a plate, and the second flange 46 may be bent from a front end of the left side of the rear bracket 46 in the leftward direction.

Therefore, the first and second flanges 47, 48 overlap each other at a position close to the rear surface of the rear bracket 46 when viewed from the side.

The first and second flanges 47, 48 may have securing holes through which securing members penetrate, respectively. That is, the first flange 47 formed on both ends of the front bracket 45 and the second flange 48 formed on both ends of the rear bracket 46 may be fixed to the backrest frame 15 by the securing members penetrating through the securing holes while overlapping each other.

Here, fixing recesses 19 may be formed on both sides of the backrest frame 15 to allow the first and second flanges 45, 46 to be fixed thereto. The fixing recess 19 may be formed to be concave toward the front relative to the rear surface of the backrest frame 15.

Therefore, the first and second flanges 47, 48 and the securing members are fixed to the fixing recesses 19, such that the rear surface of the backrest frame 15 is almost coplanar with the rear surface of the second flange 48 fixed to the fixing recess 19.

Accordingly, the present disclosure may prevent a damage or breakage to a cover caused by interference with the securing member or flange in the process of installing the cover on the backrest with the seat belt retractor being mounted in the backrest of the seat, and may ensure flatness of the outer surface of the cover installed on the backrest.

Along with this, one or more third flanges 49 may further be formed on an upper end of the rear bracket 46.

For example, three third flanges 49 may be provided at regular intervals, and each third flange 49 may have a securing hole formed thereon to allow a securing member secured to an upper end of the backrest frame 15 to penetrate therethrough.

As described above, the first and second flanges formed on the front and rear brackets, respectively, are fixed to the backrest frame while overlapping each other, so that a fixing force for the seat belt retractor may be enhanced to securely fix, and hence, vibrations or movements of the seat belt retractor occurring during driving of the vehicle may be effectively prevented.

Meanwhile, the headrest pole 18 is coupled by penetrating through the backrest frame 15 and the seat belt retractor 30 in the state in which the seat belt retractor 30 is mounted in the backrest frame 15.

To achieve this, one pair of penetrating spaces 37 may be formed in the seat belt retractor 30 to allow the one pair of headrest poles 18 to be penetratingly coupled thereto.

For example, the one pair of penetrating spaces 37 may be formed on both sides of the sensor module 32 disposed substantially at the center of the seat belt retractor 30.

That is, when viewed in FIG. 5, the left penetrating space 37 may be formed between the spindle module 31 and the sensor module 32, and the right penetrating space 37 may be formed between the pretensioning module 34 and the sensor module 32.

Accordingly, the headrest poles are penetratingly coupled to the backrest with the seat belt retractor fixed to the backrest, thereby further enhancing the fixing force of the seat belt retractor and improving workability when assembling.

As described above, in the state where the seat belt retractor 30 is mounted in the backrest frame 15, the webbing 20 is pulled out from the left end of the seat belt retractor 30, that is, the left end of the spindle module 31, to the outside through the mounting protrusion 16 formed on the backrest frame 15. Here, a rotation space 161 which has a substantially 'L' shape when viewed from above may be formed in the mounting protrusion 16. The rotation space 161 is a space in which the webbing 20 pulled out to the outside of the backrest frame 15 rotates in the horizontal direction.

That is, in the state in which both ends of the webbing 20 are disposed to face the front-rear direction of the vehicle identically to the spindle 41, the webbing 20 has its disposition direction changed to face the horizontal direction of the vehicle in the space between the spindle module 31 and the mounting protrusion 16 of the backrest frame 15.

Then, the webbing 20 is pulled out to the outside through the pull-out hole formed in the webbing pull-out portion 142 of the guide member 14 mounted on the mounting protrusion 16.

In this case, the webbing 20 may switch to various angles and directions according to occupant's physical condition or body type as shown in FIG. 2.

That is, the guide member 14 may rotate about the securing member secured to the mounting protrusion 16 in the horizontal direction, and the webbing 20 may rotate in the horizontal direction due to the rotation of the guide member 14 to be pulled out in various angles and directions.

Accordingly, the present disclosure may prevent inconvenience of an occupant caused by contact with the seat belt webbing by adjusting the pull-out direction and angle of the seat belt webbing variously according to occupant's physical condition or body type.

Although the invention made by the inventors of the present application has been specifically described according to the above embodiments, the present disclosure is not limited to the above embodiments, and may be modified variously within a scope of the technical essence of the disclosure.

That is, in the above embodiments, the configuration of the seat belt retractor applied to a driver seat has been described, but the present disclosure may be applied to a passenger seat by rotating the same seat belt retractor by 180°, and changing only the structure of the bracket to correspond to the direction in which the seat belt webbing is pulled out and the structure mounted in the backrest frame.

As described above, the present disclosure can apply the seat belt retractor of the same structure to a driver seat or a passenger seat, so that the number of components can be reduced, the manufacturing cost of a product can be reduced, and component management efficiency can be improved.

### Industrial Applicability

The present disclosure is applied to a seat belt retractor technology which safely protects occupants by restraining in an emergency situation of a vehicle, and adjusts retracting and pull-out angles of a seat belt webbing variously.

## Claims

1. A seat belt retractor comprising:
a spindle module comprising a seat belt webbing and a spindle having the seat belt webbing wound around an outer surface thereof; and
front and rear brackets which are coupled to front and rear sides of the spindle module, respectively,
wherein first and second flanges are formed on both ends of the front and rear brackets to be fixed to a backrest frame of a seat while overlapping each other.

2. The seat belt retractor of claim 1,
wherein the seat belt webbing is pulled out in a state where the seat belt webbing is disposed around the spindle along a front-rear direction of a vehicle, and then, switches to be disposed along a horizontal direction of the vehicle in an inner space of the backrest frame.

3. The seat belt retractor of claim 1,
wherein fixing recesses are formed on portions of the backrest frame where the first and second flanges are formed.

4. The seat belt retractor of claim 3,
wherein one or more third flanges are formed on an upper end of the rear bracket to be fixed to the backrest frame by using a securing member.

5. The seat belt retractor of any one of claims 1 to 4,
wherein a guide member is mounted on one side of the backrest frame to guide the seat belt webbing, and
wherein the guide member rotates about a securing member secured to the backrest frame to adjust a pull-out direction and an angle of the seat belt webbing.

6. The seat belt retractor of claim 5,
wherein a mounting portion is provided on the backrest frame to allow the guide member to be mounted thereon, and
wherein a rotation space is formed in the mounting portion to allow the seat belt webbing to rotate therein.

7. The seat belt retractor of claim 5,
wherein a headrest is mounted on an upper end of the backrest frame, and
wherein one pair of penetrating spaces are formed in the seat belt retractor to allow one pair of poles provided in the headrest to be penetratingly coupled thereto.
